# FASCICULE DE BREVET EUROPEEN

(11) **EP 1 105 247 B1**
(45) Date de publication et mention de la délivrance du brevet: **16.10.2002**
(21) Numéro de dépôt: 99957151.6
(22) Date de dépôt: 22.06.1999
(51) Int. Cl.: B23K 20/227, B23K 20/02, B32B 15/01

(54) **PROCEDE D'ASSEMBLAGE PAR SOUDAGE DIFFUSION D'UN ACIER INOXYDABLE MARTENSITIQUE ET D'UN ALLIAGE DE CUIVRE, ET ELEMENT BIMETALLIQUE OBTENU**
VERFAHREN ZUM VERBINDEN VON MARTENSITISCHEM ROSTFREIEM STAHL MIT EINER KUPFERLEGIERUNG DURCH DIFFUSIONSSCHWEISSEN UND SO HERGESTELLTES BIMETALLISCHES ELEMENT
METHOD FOR ASSEMBLING BY DIFFUSION WELDING A MARTENSITE STAINLESS STEEL AND A COPPER ALLOY AND RESULTING BIMETAL ELEMENT

(30) Priorité: 23.06.1998 FR 9807901
(43) Date de publication de la demande: 13.06.2001
(73) Titulaire: COMMISSARIAT A L'ENERGIE ATOMIQUE, 75752 Paris Cédex 15 (FR)
(72) Inventeur: RIGAL, Emmanuel, F-38000 Grenoble (FR); BURLET, Hélène, F-38500 Coublevie (FR)
(74) Mandataire: Des Termes, Monique
(86) Numéro de dépôt international: FR9901493
(87) Numéro de publication internationale: WO99067047

(56) Documents cités:
- EP-A- 0 001 173
- US-A- 2 758 368
- US-A- 3 298 803
- US-A- 4 090 873
- US-A- 4 252 263

## Description

La présente invention se rapporte à un procédé d'assemblage par soudage diffusion entre un acier inoxydable martensitique et un alliage de cuivre.

Le soudage diffusion est une technique permettant l'assemblage d'éléments en phase solide, c'est-à-dire sans fusion grâce à l'application simultanée d'une température et d'une pression élevée.

Cette technique peut être utilisée par exemple pour fabriquer une pièce bimétallique destinée à fonctionner à température élevée. L'élément, ou la partie, en acier inoxydable martensitique a un rôle dans la tenue mécanique et/ou dans la résistance à l'usure et à la corrosion de la pièce, et l'élément ou la partie en cuivre ou en alliage de cuivre a un rôle de puits thermique permettant le refroidissement de cette pièce. Ces deux éléments doivent donc être assemblés de telle façon que le transfert thermique d'un élément à l'autre soit le meilleur possible et que la résistance thermomécanique de l'assemblage soit excellente.

Une telle pièce bimétallique est utile par exemple dans l'industrie du verre pour constituer un moule, en métallurgie pour constituer un cylindre de coulée continue de bandes de métal, pour la fabrication d'un générateur acyclique ou monopolaire à refroidissement par un fluide, pour la fabrication d'un tube à rayons X, etc...

Aussi, la présente invention se rapporte également à un procédé de fabrication d'une pièce bimétallique à résistance thermomécanique comprenant un élément en acier inoxydable martensitique assemblé par soudage diffusion sans élément intermédiaire à un élément en cuivre ou en alliage de cuivre, ainsi qu'à une pièce bimétallique qui peut être obtenue par ce procédé.

### Etat de la technique

Les techniques d'assemblage par soudage entre un acier et du cuivre connues utilisent une couche intermédiaire ou un film d'un alliage par exemple à base de nickel, placée entre l'acier et le cuivre à assembler. En effet, le nickel forme une solution solide avec le cuivre, et il est tout à fait compatible avec les aciers. Il assure une bonne transition métallique entre les deux matériaux et forme une barrière empêchant la diffusion du cuivre dans l'acier. Il permet ainsi un renforcement de l'assemblage formé.

Ainsi, la demande de brevet EP-A-0 001 173 de Mitsubishi Jukogyo Kabushiki Kaisha, qui est considéré comme représentant l'état de la technique le plus proche, décrit un procédé d'assemblage par soudage diffusion entre un acier inoxydable et du cuivre. Ce procédé consiste à placer, entre l'acier et le cuivre à assembler, une couche intermédiaire constituée de Cr ou d'un alliage Ni-Cr, Cr-Ni ou Cr et contenant au plus 140 ppm de 0₂.

La demande de brevet EP-A-0 490 800 décrit un procédé d'assemblage par soudage diffusion entre un matériau en fonte austénitique GS à 18% de Ni ou en acier inoxydable austénitique type 304 et un matériau en alliage de cuivre.

Le document "Journal of Nuclear Materials", 212-215 (1994) 1585-1589 de H. Nishi, Y. Muto et K Sato décrit un procédé d'assemblage par soudage entre un acier 316 et un alliage de cuivre. L'acier 316 est un acier austénitique qui comprend 10,25% en poids de Ni et 16,29% en poids de chrome. Le chrome est décrit dans ce document, comme étant un élément qui fragilise l'assemblage formé.

Ces documents ne décrivent pas un assemblage par soudage diffusion entre un alliage de cuivre et un acier inoxydable martensitique.

La microstructure précise de l'assemblage, ou jonction, dépend de la nature de l'acier et du cuivre utilisés.

De plus, pour obtenir un acier martensitique il est nécessaire après assemblage de procéder à un traitement de trempe depuis une température élevée de façon à provoquer la transformation martensitique de l'acier. Lors de cette transformation, il se produit un changement de volume dans l'acier qui engendre des contraintes dans le cuivre. Ce n'est pas le cas avec les aciers austénitiques. Ces contraintes s'ajoutent aux contraintes de dilatation thermique différentielles entre les deux matériaux assemblés. Celles-ci sont beaucoup plus élevées dans le cas des aciers inoxydables martensitiques que dans le cas des aciers austénitiques comme en témoignent les valeurs de la dilatation thermique des matériaux présentées dans le tableau 1 ci-dessous.

**Tableau 1**

| Valeurs de la dilatation thermique du cuivre, d'un acier austénitique et d'un acier inoxydable martensitique | | | |
|---|---|---|---|
| Matériau | Cuivre | Acier austénitique | Acier inoxydable martensitique |
| Nuance | cuivre pur | types 304L, 316 | types 430, 416, 420 |
| Composition | - | 16-19% Cr, 6-14% Ni | 13-17% Cr |
| Allongement entre 20°C et 727°C | 1,366% | 1,322% | 0,899% |
| Coefficient de dilatation thermique linéaire à 727°C | 22,4x10⁻⁶K⁻¹ | 21,1x10⁻⁶K⁻¹ | 13,9x10⁻⁶K⁻¹ |

Dans le cas de l'acier inoxydable martensitique, l'assemblage est donc soumis à une sollicitation mécanique très sévère, de type "choc thermique".

La dissipation de ces contraintes sans endommagement de l'assemblage nécessite donc que ce dernier soit suffisamment résistant.

### Exposé de l'invention

La présente invention se rapporte à un procédé d'assemblage d'un élément en acier inoxydable martensitique avec un élément en cuivre ou en alliage de cuivre, ledit procédé comprenant dans cet ordre :
- une étape de dégraissage et de décapage des surfaces des éléments à assembler,
- une étape de mise en contact direct des surfaces dégraissées et décapées des éléments à assembler, et
- une étape d'assemblage par soudage diffusion des surfaces des éléments en contact.

L'homme du métier comprend aisément que le procédé selon l'invention permet d'assembler un ou plusieurs éléments en acier inoxydable martensitique avec un ou plusieurs éléments en cuivre ou alliages de cuivre respectivement.

Selon l'invention, l'élément en acier inoxydable martensitique comprend de préférence une concentration en nickel inférieure ou égale à 4% en poids, et/ou, avantageusement et, une concentration en chrome supérieure ou égale à 10% en poids. Par exemple, il peut comprendre de 0,1 à 1% en poids de C, jusqu'à environ 4% en poids de Ni, de 10 à 18% en poids de Cr, jusqu'à 2% en poids de Mo ou de W, jusqu'à 0,5% en poids de V, jusqu'à 1,5% en poids de Mn, jusqu'à 1,5% en poids de Si, jusqu'à 0,1% en poids de P, jusqu'à 0,2% en poids de S, le reste étant du fer et des impuretés.

Un exemple d'un acier inoxydable martensitique pouvant constituer cet élément est l'acier Z20 CN17-02 qui comprend 0,2% en poids de C, 1,25 à 2,5% en poids de Ni, 15 à 17% en poids de Cr, 1% en poids de Mn, 1% en poids de Si, 0,04% en poids de P, 0,03% en poids de S, le reste étant du fer et des impuretés

Selon l'invention, l'élément en cuivre ou en alliage de cuivre peut être par exemple constitué d'un alliage de cuivre dont la matrice est non alliée, c'est-à-dire ne comprenant que du cuivre et des impuretés, selon la norme NF A 51050 au moins 99,8% en poids de cuivre, ou d'un alliage de cuivre à renforcement par dispersion d'oxydes de préférence dont la matrice est non alliée.

Selon l'invention, les éléments pouvant être assemblés selon le procédé de l'invention peuvent avoir une taille et une géométrie quelconques. Ils peuvent par exemple avoir un volume supérieur à un dm3 et une épaisseur pouvant aller jusqu'à quelques centimètres. Ainsi, ils peuvent aisément avoir une épaisseur supérieure ou égale à 1 mm au niveau de leur surface à assembler.

Selon le procédé de l'invention, l'étape de dégraissage et de décapage des surfaces des éléments à assembler peut consister en des traitements classiques de dégraissage et de décapage de surfaces métallique. Le but de cette étape est d'obtenir de surfaces propres, dégraissées et exemptes d'oxydation. Le dégraissage de ces surfaces peut par exemple être effectuée au moyen d'un solvant ou d'un détergent classique pour dégraisser des métaux. Le décapage peut être un décapage chimique ou mécanique, il peut par exemple être réalisé au moyen d'une solution acide ou basique, ou par rectification ou polissage. Selon l'invention, la technique de décapage peut être un décapage chimique suivi d'un rinçage à l'eau durant lequel la surface des matériaux est frottée à l'aide d'un tampon abrasif à base, par exemple de fibres d'alumine. Ce traitement peut être répété plusieurs fois, le dernier rinçage pouvant être réalisé avec de l'eau déminéralisée.

Cette liste n'est pas limitative, le choix de toute technique permettant d'éliminer des traces de pollution et d'oxydation sur les surfaces des éléments à assembler étant possible.

Pour la surface de l'élément en acier inoxydable martensitique à assembler, le solvant de dégraissage peut être un solvant organique, par exemple du type cétone, éther, alcool, alcane ou alcène chloré tel que le trichloroéthylène, ou un mélange de ceux-ci etc... Un solvant préféré est un mélange en proportions égales d'alcool éthylique, d'éther et d'acétone. Un autre solvant préféré est le trichloroéthylène. Le décapage chimique peut être réalisé avec une solution acide, par exemple un bain d'acide fluorhydrique à 10% ou un mélange comprenant de 1 à 5% d'acide fluorhydrique avec 30 à 40% d'acide nitrique. La durée de décapage peut être par exemple de 10 secondes à 5 minutes, par exemple de 20 à 30 secondes, à une température de 15 à 30°C, par exemple de 20°C. Les surfaces décapées peuvent ensuite être rincées dans un ou plusieurs bains successifs par exemple d'eau déminéralisée.

Pour la surface de l'élément en cuivre ou en alliage de cuivre, le dégraissage peut être effectué au moyen d'un solvant organique tels que ceux cités ci-dessus, par exemple au moyen d'acétone ou d'un mélange ternaire acétone-alcool éthylique-éther de préférence dans des proportions 1/3, 1/3, 1/3. Le dégraissage de cette surface peut éventuellement être suivi d'un passage aux ultrasons pendant une durée par exemple d'une minute. La surface peut ensuite être dégraissée dans de l'éthanol sous ultrasons puis séchée par exemple au moyen d'air chaud. Cette surface peut alors être décapée par exemple au moyen d'un bain de bichromate de potassium par exemple à une concentration de 0,23 à 0,30 mole/litre, d'acide sulfurique à une concentration par exemple de 0,1 à 0,13 mole/litre, et d'eau déminéralisée, pendant par exemple 1 à 3 minutes, par exemple pendant 1 minute 30 secondes environ. La surface peut ensuite être rincée dans de l'éthanol par exemple sous ultrasons, puis dans de l'eau déminéralisée et séchée par exemple au moyen d'air chaud.

Selon l'invention, l'étape suivante est une étape de mise en contact direct des surfaces dégraissées et décapées des éléments. Cette mise en contact correspond à une mise en place ou un positionnement des éléments à assembler surface contre surface, selon un empilement désiré. De préférence, cette mise en contact est faite dans un délai inférieur à une heure suivant l'étape de dégraissage et de décapage des surfaces à assembler, de manière à limiter les risques d'oxydation, sauf dans le cas où des précautions particulières ont été prises pour stocker les éléments dégraissés et décapés, ces précautions pouvant constituer par exemple à maintenir les éléments dans une atmosphère propre et non oxydante telle que l'azote au moyen d'un ensachage dans des sacs étanches. Cette mise en contact est dite "directe", car elle se fait selon la présente invention sans disposer sur les surfaces à assembler une couche intermédiaire d'un alliage telle que celles décrites dans l'art antérieur.

Selon l'invention, l'étape qui suit la mise en contact des surfaces des éléments à assembler est une étape d'assemblage par soudage diffusion des surfaces mises en contact direct. Le soudage diffusion peut être effectué par exemple par compression isostatique ou par pressage uniaxial à chaud, par exemple, par des techniques classiques connues de l'homme du métier.

Selon l'invention, lorsque le soudage diffusion est effectué par compression isostatique à chaud, les matériaux mis en contact peuvent être introduits dans une enveloppe qui permet d'isoler les éléments à assembler de l'atmosphère et d'évacuer l'enveloppe pour l'assemblage des éléments par soudage diffusion dans celle-ci. Il apparaît évidemment que l'étape de mise en contact peut aussi être faite dans l'enveloppe directement.

Selon l'invention, l'enveloppe peut être constituée de tout matériau étanche, suffisamment résistant pour supporter un vide au moins partiel dans celle-ci, et pour supporter les températures et les pressions élevées nécessaires pour assembler les éléments. Par exemple, l'enveloppe peut être une enveloppe métallique, par exemple en acier inoxydable, en acier doux ou en titane et ses alliages. Elle peut être par exemple formée à partir d'une tôle ayant une épaisseur par exemple de 1 à 20 mm environ, par exemple de 1 à 10 mm environ. De préférence, l'enveloppe peut épouser la forme extérieure des éléments à assembler. Dans un mode de réalisation selon l'invention, l'élément en acier inoxydable martensitique peut fermer ladite enveloppe en jouant le rôle de couvercle de l'enveloppe, l'élément en acier pouvant alors être soudé à l'enveloppe. Selon l'invention, cette enveloppe peut être réalisée par découpage, éventuellement cintrage et soudage d'une tôle métallique ou par un quelconque procédé connu de l'homme du métier.

L'enveloppe est ensuite dégazée de manière à créer un vide dans celle-ci. Le dégazage peut être réalisé au moyen d'une pompe à vide et d'un chauffage de l'ensemble éléments à assembler/enveloppe.

Un exemple de dégazage peut consister à évacuer l'enveloppe à température ambiante jusqu'à l'obtention d'un vide résiduel inférieur ou égal à 10 Pa, puis à chauffer l'ensemble à température modérée, par exemple inférieure à 300°C pendant quelques heures, par exemple 5 heures, tout en continuant à évacuer.

Il peut être utile de vérifier que l'enveloppe est étanche, avant la réalisation de l'opération de soudage diffusion, par exemple au moyen d'un test à l'hélium.

Une fois l'étape de dégazage effectuée, l'enveloppe est rendue totalement étanche par l'obturation de l'ouverture ayant servi à son évacuation, l'obturation étant réalisée par exemple à l'aide d'une soudure TIG.

Les éléments mis en contact dans l'enveloppe dégazée peuvent ensuite être assemblés par soudage diffusion. L'assemblage peut être réalisé dans une enceinte de compression isostatique à chaud.

Selon l'invention, lorsque le soudage diffusion est effectué par compression isostatique à chaud, l'étape d'assemblage par soudage diffusion des surfaces des éléments mis en contact direct peut comprendre par exemple au moins un cycle de chauffage et de pressurisation comprenant successivement :
- une montée en température et en pression de manière à atteindre une température choisie dans un intervalle de température permettant une mise en solution de l'acier inoxydable martensitique, et une pression de 5x10⁷ à 2x10⁸ Pa environ,
- un maintien de la température choisie et de la pression pendant une durée suffisante pour une mise en solution de l'acier inoxydable martensitique de l'élément correspondant, et
- une descente en température et en pression.

Selon l'invention, pour un acier inoxydable martensitique tel que ceux cités précédemment, l'intervalle de température permettant une mise en solution de l'acier inoxydable martensitique peut être de 800 à 1080°C environ. La température choisie peut par exemple être d'environ 975°C. La durée de chacune des étapes de ce cycle peut varier de quelques minutes à quelques heures. Selon l'invention, la montée en température peut être effectuée pendant 30 à 180 minutes, par exemple pendant environ 1 heure. La pression peut être de préférence de 8x10⁷ à 1,5x10⁸ Pa.

Le maintien de la température choisie et de la pression peut être effectué pendant une durée allant de 30 à 120 minutes, par exemple pendant environ une heure.

La descente en température peut être effectuée de manière à permettre une transformation martensitique de l'élément en acier inoxydable. Ceci correspond à une trempe de l'acier. Cette descente en température peut par exemple être pour l'acier inoxydable précité de 30 à 150°C/minute, entre environ 975°C et 730°C, par exemple de 110°C/minute, de 15 à 75°C/minute entre environ 730°C et 500°C, par exemple de 40°C/minute, et plus lentement en dessous de 500°C.

La descente en température peut aussi être effectuée de manière à ne pas obtenir une structure martensitique de l'acier. Cette descente en température sera alors suivie d'un traitement de trempe pour permettre une transformation martensitique de l'acier.

Selon l'invention, l'assemblage des éléments mis en contact par soudage diffusion peut aussi être réalisé par pressage uniaxial à chaud. Les éléments à assembler peuvent être disposés dans une presse équipée d'un système de chauffage et d'une enceinte à vide. Un vide de l'ordre de 10⁻¹ à 10⁻³ Pa environ peut alors être établi dans ladite enceinte, les surfaces des éléments à assembler étant en contact direct, dans la presse. Le pressage uniaxial à chaud peut être réalisé en appliquant une pression allant de 1 à 100 Mpa environ, par exemple de 5 à 30 MPa environ. Il peut comprendre au moins un cycle de chauffage comprenant successivement :
- une montée en température de manière à atteindre une température choisie dans l'intervalle de température permettant une mise en solution de l'acier inoxydable martensitique,
- un maintien de la température pendant une durée suffisante pour la mise en solution de l'acier inoxydable martensitique, et
- une descente en température.

Les températures et durées de ce cycle peuvent être par exemple identiques à celles décrites pour la compression isostatique à chaud pour un acier tel que celui décrit précédemment.

Le procédé d'assemblage selon l'invention peut comprendre en outre une étape d'un traitement de revenu de l'élément en acier inoxydable martensitique assemblé. Ce traitement est destiné à adoucir l'acier. Il peut être réalisé dans un four, par exemple à une température de 500 à 800°C selon les propriétés mécaniques désirées, par exemple à environ 700°C.

De façon inattendue, il a été observé par les inventeurs que lorsqu'un assemblage par soudage diffusion entre du cuivre et un acier inoxydable martensitique est effectué sans matériau intermédiaire, l'assemblage ainsi réalisé possède une excellente résistance aux chocs thermiques. Cette résistance aux chocs thermiques a pu être mise en évidence par l'absence de dégradation de l'interface entre les éléments assemblés selon le procédé de l'invention après une série de plusieurs dizaines de chauffages à l'air, côté élément en acier inoxydable martensitique, à l'aide d'un chalumeau oxyacétylénique jusqu'à une température maximum de 900°C environ, suivis chacun d'une trempe à l'eau.

L'assemblage selon l'invention est suffisamment résistant pour que les traitements de trempe et de revenu, destinés notamment à la transformation martensitique de l'acier et à la dissipation des contraintes liées à l'assemblage entre le cuivre et l'acier, n'endommagent pas l'assemblage formé.

De plus, l'assemblage formé par le procédé de l'invention permet un excellent transfert thermique d'un élément à l'autre.

Par ailleurs, le fait de ne pas utiliser un matériau intermédiaire tels que ceux décrits dans l'art antérieur entre le cuivre et l'acier inoxydable martensitique réduit de manière importante le coût de réalisation de l'assemblage en évitant l'ajout de ces matériaux, ainsi que les opérations de revêtement ou d'interposition de ce matériau entre les deux éléments.

Le procédé de l'invention permet en outre d'assembler des éléments ayant une taille et une géométrie quelconque, par exemple des volumes pouvant être supérieurs au dm³ avec des épaisseurs de cuivre et/ou d'acier allant jusqu'à plusieurs centimètres. Il permet en outre de supprimer des difficultés techniques de l'art antérieur telles que des difficultés liées à la manutention de pièces de grande taille ou de masse importante, des difficultés liées à l'obtention d'un revêtement de matériau intermédiaire d'épaisseur régulière sur des pièces de géométrie complexe, des difficultés liées à la fragilité du revêtement par exemple au déchirement pour un revêtement sous forme de feuille rendant leur mise en place délicate, des difficultés liées à la sensibilité du revêtement à la rayure, etc...

Un autre avantage est la possibilité d'intégrer au procédé d'assemblage selon l'invention au moins une partie d'un traitement thermique destiné à restaurer les propriétés de l'acier inoxydable martensitique, cette partie comportant au moins la mise en solution de l'acier et sa trempe. Il en résulte une réduction de coût supplémentaire car le post-traitement de la pièce assemblée hors de l'enceinte de compression isostatique à chaud peut être limité à un revenu destiné à adoucir l'acier.

Le procédé selon l'invention trouve par exemple une application dans la fabrication de pièces métalliques fonctionnant à température élevée, dans lesquelles la partie en acier inoxydable martensitique a un rôle de résistance à l'usure, à la corrosion ou un rôle de tenue mécanique, alors que la partie en cuivre a un rôle de puits thermique permettant ainsi le refroidissement de la pièce.

Aussi, la présente invention se rapporte également à un procédé de fabrication d'une pièce bimétallique comprenant un élément en acier inoxydable martensitique assemblé à un élément en cuivre ou en alliage de cuivre, ledit procédé comprenant un procédé d'assemblage selon l'invention.

Ce procédé permet par exemple de fabriquer une pièce bimétallique telle qu'un moule pour l'industrie du verre, un cylindre de coulée continue de bandes de métal, un générateur acyclique ou monopolaire à refroidissement par un fluide, un tube à rayons X, etc... avec notamment tous les avantages cités précédemment liés à la présente invention.

L'invention se rapporte également à un procédé de fabrication d'une pièce bimétallique comprenant un élément en acier inoxydable martensitique assemblé à un élément en cuivre ou en alliage de cuivre, ledit procédé comprenant dans cet ordre :
- une étape de dégraissage et de décapage de la surface de l'élément en acier inoxydable martensitique à assembler,
- une étape de dépôt d'une poudre d'un alliage en cuivre ou en alliage de cuivre en contact direct sur la surface dégraissée et décapée de l'élément en acier inoxydable martensitique,
- une étape de compaction de la poudre de cuivre déposée sur ladite surface dégraissée et décapée de manière à former un élément en cuivre ou en alliage de cuivre ayant un surface en contact direct avec la surface dégraissée et décapée, et
- une étape d'assemblage par soudage diffusion des surfaces des éléments en contact direct.

L'étape de dégraissage et de décapage de la surface de l'élément en acier inoxydable martensitique peut être par exemple la même que celle décrite précédemment.

L'étape d'assemblage par soudage diffusion peut comprendre un soudage diffusion par compression isostatique à chaud ou par pressage uniaxial tel que décrit précédemment. Cette étape peut être suivie si nécessaire d'une étape d'un traitement de revenu de l'acier inoxydable martensitique assemblé.

Selon ce procédé, l'assemblage par soudage diffusion peut être avantageusement réalisé par compression isostatique à chaud du fait de l'utilisation d'une poudre, et aussi, par exemple dans le cas d'éléments en acier inoxydable martensitique de forme complexe. Dans ce cas, l'étape de dépôt d'une poudre d'un alliage de cuivre en contact direct avec l'élément en acier inoxydable martensitique peut être réalisée par exemple dans une enveloppe telle que celle décrite précédemment.

Cette étape peut par exemple consister à placer dans une enveloppe un, ou même plusieurs, élément(s) en acier inoxydable martensitique et à remplir cette enveloppe d'une poudre de l'alliage de cuivre de manière à ce que le ou les élément(s) en acier soient entourés entièrement de cette poudre en contact direct sur une, ou sur toutes, leur(s) surface(s) suivant les pièces bimétalliques à fabriquer.

Avant l'étape de compaction, l'enveloppe est dégazée, comme décrit précédemment, et ce dégazage peut durer de quelques heures à quelques jours, par exemple deux jours.

Selon ce procédé, la poudre d'alliage de cuivre peut être une poudre constituée de particules d'un alliage de cuivre tel que ceux décrits précédemment, lesdites particules pouvant avoir par exemple un diamètre de 1µm à 1 mm suivant le résultat désiré.

Ce procédé de l'invention permet donc d'effectuer simultanément la compaction d'une poudre d'un alliage de cuivre et le soudage diffusion de cette poudre avec un acier inoxydable martensitique, alors que cela est difficile lorsqu'un matériau intermédiaire est appliqué comme dans l'art antérieur.

Ce procédé présente par ailleurs l'avantage de permettre l'obtention d'une pièce bimétallique comprenant une partie en alliage de cuivre habituellement obtenue par métallurgie des poudres. Le fait de densifier la poudre lors de l'assemblage évite d'utiliser un élément en cuivre densifié au préalable et il s'ensuit une économie des coûts de densification et d'usinage de l'élément.

L'invention se rapporte également à une pièce bimétallique à résistance thermomécanique comprenant un élément en acier inoxydable martensitique assemblé à élément en cuivre on en alliage of cuivre, dans lequel ces éléments sont assemblés par soudage diffusion direct, c'est-à-dire sans matériau intermédiaire, par exemple par un procédé conforme à la présente invention, ainsi qu'à une telle pièce bimétallique dans laquelle les éléments assemblés ont une épaisseur supérieure ou égale à environ 1 mm au niveau de leurs surfaces assemblées.

D'autres avantages et caractéristiques de la présente invention apparaîtront encore à la lecture des exemples qui suivent donnés bien entendu à titre illustratif et non limitatif.

### Exemples

Dans ces exemples, l'élément en acier inoxydable martensitique est en acier Z20 CN17-02 et l'élément en cuivre est constitué de cuivre électrolytique contenant moins de 200 ppm d'oxygène. En outre, les surfaces à assembler de ces éléments sont dégraissées et décapées chimiquement.

Le dégraissage est effectué au moyen d'un mélange ternaire acétone-alcool éthylique-éther dans des proportions 1/3, 1/3, 1/3 pour les deux éléments en acier et en cuivre. Ce dégraissage est suivi d'un rinçage à l'eau déminéralisée et d'un séchage à l'air chaud.

Le décapage chimique est effectuée au moyen d'une solution contenant 100 ml d'acide nitrique 14 mol/l, 20 ml d'acide fluorhydrique à 23 mol/1 et 900 ml d'eau pour l'élément en acier, et au moyen d'une solution contenant 62,5 mg de bichromate de potassium de pureté supérieure ou égale à 99,5% en poids, 187 ml d'acide sulfurique à 18 mol/l et 625 ml d'eau pour l'élément en cuivre électrolytique.

### Exemple 1 : assemblage par soudage diffusion par compression isostatique à chaud avec transformation martensitique

Après dégraissage et décapage des éléments à assembler de la manière décrite ci-dessous, les éléments sont introduits en contact direct sans revêtement intermédiaire entre eux, dans une enveloppe fabriquée à partir de tôles d'acier austénitique inoxydable par découpage, cintrage et soudage. L'enveloppe est fermée par soudage TIG sur la périphérie. Un queusot en acier inoxydable sert à effectuer un dégazage dans l'enveloppe jusqu'à une pression de 1 Pa à 250°C pendant une nuit.

L'enveloppe et son contenu sont ensuite soumis à un cycle de compression isostatique à chaud comprenant une montée d'une heure à 975°C et 108 Pa, un maintien, ou palier, d'une heure dans ces conditions, et une descente à une vitesse moyenne de 110°C par minute entre 975°C et 730°C, 40°C par minute entre 730°C et 500°C et plus lentement en dessous de 500°C. Cette descente est suffisamment rapide pour provoquer une transformation martensitique dans l'acier. A l'issue de ce cycle, l'enveloppe et son contenu sont soumis à un revenu en four destiné à adoucir l'acier.

L'assemblage ainsi réalisé possède une excellente résistance aux chocs thermiques, celle-ci étant évaluée par l'absence de dégradation de l'interface entre les matériaux assemblés après une série de plusieurs dizaines de chauffages à l'air côté acier à l'aide d'un chalumeau oxyacétylènique, jusqu'à une température maximum de 900°C environ, suivie chacun d'une trempe à l'eau.

### Exemple 2 : assemblage par soudage diffusion par compression isostatique à chaud suivi d'une transformation martensitique

Cet exemple se rapporte à la même application que dans l'exemple 1, mais la transformation martensitique de l'acier est effectuée après l'assemblage. Les pièces sont soumises à la même préparation de surface et sont conditionnées de la même façon dans une enveloppe. Le cycle de compression isostatique à chaud est effectué à 930°C au lieu de 975°C et la descente dure deux heures. L'acier ne possède pas de structure entièrement martensitique après assemblage. Les pièces sont soumises après compression isostatique à chaud à un traitement thermique comportant d'une part un chauffage à 975°C suivi d'une trempe à l'eau et, d'autre part, un revenu.

L'assemblage ainsi réalisé présente toutes les caractéristiques décrites dans la description et dans les exemples qui précèdent.

### Exemple 3 : assemblage par soudage diffusion par pressage uniaxial à chaud

Après dégraissage et décapage des éléments à assembler de la manière décrite ci-dessus, les éléments sont introduits dans une enceinte d'une presse uniaxiale à chaud, les surfaces de ces éléments à assembler étant mise en contact direct, sans revêtement intermédiaire. Un vide de l'ordre de 10 à 10⁻³ Pa est établi dans cette enceinte.

Le cycle de température est identique à celui de l'exemple 1 ou de l'exemple 2.

La pression appliquée par la presse est de 10 Mpa.

La durée du cycle est du même ordre de grandeur que celui de la compression isostatique à chaud.

L'assemblage ainsi obtenu présente les mêmes propriétés que celles obtenues dans les exemples 1 et 2.

### Exemple 4 : fabrication de pièces bimétalliques

Les pièces bimétalliques fabriquées dans cet exemple sont des ébauches cylindriques de moules de verrerie constituées chacune d'un élément en cuivre électrolytique contenant moins de 200 ppm d'oxygène et d'un élément en acier inoxydable martensitique Z20 CN17-02. Le diamètre de ces éléments est de 300 mm, l'épaisseur de l'élément en acier varie de 2 à 10 cm et l'épaisseur de l'élément en cuivre varie de 5 à 13 cm.

Ces éléments sont soumis à un dégraissage et à un décapage tels que ceux décrits précédemment, et sont introduits en contact direct dans une enveloppe telle que celle décrite dans les exemples 1 et 2 ci-dessus.

Une partie de ces pièces sont assemblées par soudage diffusion par compression isostatique à chaud tel que décrit dans l'exemple 1 ou 2, et une autre partie par pressage uniaxial à chaud tel que décrit dans l'exemple 3.

Les pièces bimétalliques obtenues présentent toutes les caractéristiques d'assemblage décrites dans la description et dans les exemples qui précèdent.

## Revendications

1. Procédé d'assemblage d'un élément en acier inoxydable nartensitique avec un élément en cuivre ou en alliage de cuivre, ledit procédé comprenant dans cet ordre :
- une étape de dégraissage et de décapage des surfaces des éléments à assembler,
- une étape de mise en contact direct des surfaces dégraissées et décapées des éléments à assembler, et
- une étape d'assemblage par soudage diffusion des surfaces des éléments en contact, par compression isostatique à chaud ou par pressage uniaxial à chaud.

2. Procédé de fabrication d'une pièce bimétallique comprenant un élément en acier inoxydable martensitique assemblé à un élément en cuivre ou en alliage de cuivre, ledit procédé comprenant un procédé d'assemblage selon la revendication 1.

3. Procédé de fabrication d'une pièce bimétallique comprenant un élément en acier inoxydable martensitique assemblé à un élément en cuivre ou en alliage de cuivre, ledit procédé comprenant dans cet ordre :
- une étape de dégraissage et de décapage de la surface de l'élément en acier inoxydable martensitique à assembler,
- une étape de dépôt d'une poudre d'un alliage en cuivre ou en alliage de cuivre en contact direct sur la surface dégraissée et décapée de l'élément en acier inoxydable martensitique,
- une étape de compaction de la poudre de cuivre déposée sur ladite surface dégraissée et décapée de manière à former un élément comprenant du cuivre ayant une surface en contact direct avec la surface dégraissée et décapée, et
- une étape d'assemblage par soudage diffusion des surfaces des éléments en contact direct, par compression isostatique à chaud ou par pressage uniaxial à chaud.

4. Procédé selon la revendication 1, 2 ou 3, dans lequel l'acier martensitique comprend du nickel à une concentration inférieure ou égale à 4% en poids.

5. Procédé selon l'une des revendications 1, 2 ou 3, dans lequel l'acier martensitique comprend du chrome à une concentration supérieure ou égale à 10% en poids.

6. Procédé selon l'une quelconque des revendications 1 à 5, dans lequel l'élément en cuivre ou en alliage de cuivre est constitué d'un alliage de cuivre à renforcement par dispersion d'oxydes.

7. Procédé selon l'une quelconque des revendications 1 à 5, dans lequel l'élément en cuivre ou en alliage de cuivre est un élément comprenant au moins 99,8% en poids de cuivre.

8. Procédé selon l'une quelconque des revendications précédentes, dans lequel les éléments à assembler ont une épaisseur supérieure ou égale à 1 mm au niveau de leur surface à assembler.

9. Procédé selon la revendication 1, dans lequel l'assemblage par soudage diffusion étant effectué par compression isostatique à chaud, il comprend au moins un cycle de chauffage et de pressurisation comprenant successivement :
- une montée en température et en pression de manière à atteindre une température choisie dans un intervalle de température permettant une mise en solution de l'acier inoxydable martensitique, et une pression de 5x10⁷ à 2x10⁸ Pa environ,
- un maintien de la température choisie et de la pression pendant une durée suffisante pour une mise en solution de l'acier inoxydable martensitique de l'élément correspondant, et
- une descente en température et en pression.

10. Procédé selon la revendication 1, dans lequel l'assemblage par soudage diffusion étant effectué par pressage uniaxial, il comprend au moins un cycle de chauffage comprenant successivement :
- une montée en température de manière à atteindre une température choisie dans un intervalle de température permettant une mise en solution de l'acier inoxydable martensitique,
- un maintien de la température choisie pendant une durée suffisante pour une mise en solution de l'acier inoxydable martensitique, et
- une descente en température.

11. Procédé selon la revendication 9 ou 10, dans lequel la descente en température est suffisamment rapide pour obtenir une structure martensitique de l'élément en acier inoxydable.

12. Procédé selon la revendication 9 ou 10, dans lequel la descente en température ne permettant pas d'obtenir une structure entièrement martensitique de l'acier, ladite descente en température est suivie d'un traitement de trempe pour permettre une transformation martensitique de l'acier.

13. Procédé selon l'une quelconque des revendications 1 à 12, comprenant en outre une étape d'un traitement de revenu de l'élément en acier inoxydable martensitique assemblé.

14. Pièce bimétallique à résistance thermomécanique comprenant un élément en acier inoxydable martensitique assemblé par soudage diffusion sans élément intermédiare à un élément en cuivre ou en alliage de cuivre, susceptible d'être obtenue par un procédé selon l'une quelconque des revendications 1 à 13.

15. Pièce bimétallique selon la revendication 14, dans laquelle les éléments assemblés ont une épaisseur supérieure ou égale à environ 1 mm au niveau de leurs surfaces assemblées.

16. Moule de verrerie comprenant une pièce bimétallique à résistance thermomécanique selon la revendication 14 ou 15.

## Patentansprüche

1. Verfahren zum Verbinden eines Elements aus nichtoxidierbarem martensitischem Stahl mit einem Element aus Kupfer oder Kupferlegierung, wobei dieses Verfahren umfasst, in dieser Reihenfolge:
- einen Schritt zum Entfetten und Beizen der Oberflächen der zu verbindenden Elemente,
- einen Schritt zum Herstellen eines direkten Kontakts zwischen den entfetteten und gebeizten Oberflächen der zu verbindenden Elemente, und
- einen Schritt zum Verbinden der Oberflächen der in Kontakt befindlichen Elemente mittels Diffusionsschweißung durch isostatisches Warmpressen bzw. -verdichten oder durch uniaxiales Warmpressen.

2. Verfahren zum Herstellen eines Bimetallteils, ein Element aus nichtoxidierbarem martensitischem Stahl umfassend, verbunden mit einem Element aus Kupfer oder Kupferlegierung, wobei dieses Verfahren ein Verbindungsverfahren nach Anspruch 1 umfasst.

3. Verfahren zum Herstellen eines Bimetallteils, ein Element aus nichtoxidierbarem martensitischem Stahl umfassend, verbunden mit einem Element aus Kupfer oder Kupferlegierung, wobei das Verfahren umfasst, in dieser Reihenfolge:
- einen Schritt zum Entfetten und Beizen der Oberflächen der zu verbindenden Elemente,
- einen Schritt zum Aufbringen eines Pulvers aus Kupfer oder Kupferlegierung direkt auf die entfettete und gebeizte Oberfläche des Elements aus nichtoxidierbarem martensitischem Stahl,
- einen Schritt zum Kompaktieren bzw. Verdichten des auf der genannten entfetteten und gebeizten Oberfläche aufgebrachten Pulvers, um ein Kupfer enthaltendes Element mit einer Oberfläche zu bilden, die direkten Kontakt mit der entfetteten und gebeizten Oberfläche hat, und
- einen Schritt zum Verbinden der Oberflächen der in direktem Kontakt befindlichen Elemente mittels Diffusionsschweißung durch isostatisches Warmpressen bzw. - verdichten oder durch uniaxiales Warmpressen.

4. Verfahren nach Anspruch 1, 2 oder 3, bei dem der martensitische Stahl Nickel mit einer Konzentration von unter oder gleich 4 Gew.% enthält.

5. Verfahren nach Anspruch 1, 2 oder 3, bei dem der martensitische Stahl Chrom mit einer Konzentration von über oder gleich 10 Gew.% enthält.

6. Verfahren nach einem der Ansprüche 1 bis 5, bei dem das Element aus Kupfer oder Kupferlegierung durch eine Kupferlegierung, verstärkt durch dispergierte Oxide bzw. durch Oxideinlagerung, gebildet wird.

7. Verfahren nach einem der Ansprüche 1 bis 5, bei dem das Element aus Kupfer oder Kupferlegierung ein Element mit wenigstens 99,8 Gew.% Kupfer ist.

8. Verfahren nach einem der vorangehenden Ansprüche, bei dem die zu verbindenden Elemente in Höhe ihrer zu verbindenden Oberfläche eine Dicke von über oder gleich 1 mm haben.

9. Verfahren nach Anspruch 1, das - wenn das Verbinden mittels Diffusionsschweißung durch isostatisches Warmpressen bzw. -verdichten erfolgt -, mindestens einen Heiz- und Unter-Druck-Setzungs-Zyklus enthält, der nacheinander umfasst:
- einen Temperatur- und Druckanstieg bis zum Erreichen einer Temperatur, die aus einem Temperaturintervall ausgewählt wird, das ermöglicht, den nichtoxidierbaren martensitischen Stahl in einen Lösungszustand zu versetzen und den Druck auf ungefähr 5x10⁷ bis 2x10⁸ ansteigen zu lassen,
- eine Aufrechterhaltung der gewählten Temperatur und des Drucks über einen ausreichend langen Zeitraum, um den nichtoxidierbaren martensitischen Stahl des entsprechenden Elements in einen Lösungszustand zu versetzen, und
- einen Temperatur- und Druckabstieg.

10. Verfahren nach Anspruch 1, das - wenn das Verbinden mittels Diffusionsschweißung durch uniaxiales Warmpressen erfolgt -, mindestens einen Heizzyklus enthält, der nacheinander umfasst:
- einen Temperaturanstieg bis zum Erreichen einer Temperatur, die aus einem Temperaturintervall ausgewählt wird, das ermöglicht, den nichtoxidierbaren martensitischen Stahl in einen Lösungszustand zu versetzen,
- eine Aufrechterhaltung der gewählten Temperatur über einen ausreichend langen Zeitraum, um den nichtoxidierbaren martensitischen Stahl in einen Lösungszustand zu versetzen, und
- einen Temperaturabstieg.

11. Verfahren nach Anspruch 9 oder 10, bei dem der Temperaturabstieg genügend schnell ist, um bei dem Element aus nichtoxidierbarem Stahl eine martensitische Struktur zu erhalten.

12. Verfahren nach Anspruch 9 oder 10, bei dem der Temperaturabstieg nicht ausreichend schnell ist, um bei dem Element aus nichtoxidierbarem Stahl eine martensitische Struktur zu erhalten, wobei auf diesen Temperaturabstieg eine Abschreckbehandlung folgt, um eine martensitische Umwandlung des Stahl zu ermöglichen.

13. Verfahren nach einem der Ansprüche 1 bis 12, das außerdem einen Schritt einer Anlass- bzw. Aushärtungs- bzw. Vergütungsbehandlung des verbundenen Elements aus nichtoxidierbarem martensitischem Stahl enthält.

14. Bimetallteil mit thermomechanischer Festigkeit, ein Element aus nichtoxidierbarem martensitischen Stahl umfassend, durch Diffusionsschweißung ohne Zwischenelement mit dem Element aus Kupfer oder Kupferlegierung verbunden, hergestellt durch ein Verfahren nach einem der Ansprüche 1 bis 13.

15. Bimetallteil nach Anspruch 14, bei dem die verbundenen Elemente in Höhe ihrer verbundenen Oberflächen eine Dicke von über oder ungefähr 1 mm haben.

16. Glasgießform, ein Bimetallteil mit thermomechanischer Festigkeit nach Anspruch 14 oder 15 umfassend.

## Claims

1. Assembly process of a martensitic stainless steel component with a component of copper or copper alloy, said process comprising in the following order:
- a step consisting of degreasing and stripping the surfaces of the components to be assembled,
- a step consisting of placing the degreased and stripped surfaces of the components to be assembled in direct contact, and
- a step consisting of diffusion welding assembly of the surfaces of the components in contact, by hot isostatic compression or by hot uniaxial pressing.

2. Process to produce a bimetal part comprising a component made of martensitic stainless steel assembled with a component of copper or copper alloy, said process comprising an assembly process according to claim 1.

3. Process to produce a bimetal part comprising a martensitic stainless steel component assembled with a component of copper or copper alloy, said process comprising in the following order:
- a step consisting of degreasing and stripping the surfaces of the martensitic stainless steel component to be assembled,
- a step consisting of depositing a powder of an alloy of copper or copper alloy in direct contact on the degreased and stripped surface of the martensitic stainless steel component,
- a step consisting of compacting the copper powder deposited on said degreased and stripped surface so as to form a component comprising copper with a surface in direct contact with the degreased and stripped surface, and
- a step consisting of diffusion welding assembly of the surfaces of the components in direct contact, by hot isostatic compression or by hot uniaxial pressing.

4. Process according to claim 1, 2 or 3, wherein the martensitic steel comprises nickel at a concentration less than or equal to 4% by weight.

5. Process according to any of claims 1, 2 or 3, wherein the martensitic steel comprises chromium at a concentration greater than or equal to 10% by weight.

6. Process according to any of claims 1 to 5, wherein the component of copper or copper alloy is composed of a copper alloy reinforced by oxide dispersion.

7. Process according to any of claims 1 to 5, wherein the component of copper or copper alloy is a component comprising at least 99.8% of copper by weight.

8. Process according to any of the above claims, wherein the components to be assembled have a thickness greater than or equal to 1 mm on their surface to be assembled.

9. Process according to claim 1, wherein the diffusion welding assembly being performed by hot isostatic compression, it comprises at least one heating and pressurization cycle comprising successively:
- an increase in temperature and pressure so as to reach a temperature chosen in a temperature range enabling the martensitic stainless steel to be placed in solution, and a pressure of approximately 5x10⁷ to 2x10⁸ Pa,
- stabilization of the selected temperature and the pressure for a sufficient time to place the martensitic stainless steel of the corresponding component in solution, and
- a decrease in temperature and pressure.

10. Process according to claim 1, wherein the diffusion welding assembly being performed by uniaxial pressing, it comprises at least one heating and pressurization cycle comprising successively:
- an increase in temperature so as to reach a temperature chosen in the temperature range enabling the martensitic stainless steel to be placed in solution,
- stabilization of the temperature for a sufficient time to place the martensitic stainless steel in solution, and
- a decrease in temperature.

11. Process according to claim 9 or 10, wherein the decrease in temperature is sufficiently rapid to obtain a martensitic structure of the stainless steel component.

12. Process according to claim 9 or 10, wherein the decrease in temperature not enabling the production of an entirely martensitic structure, said decrease in temperature is followed by a quench hardening treatment to enable martensitic conversion of the steel.

13. Process according to any of claims 1 to 12, also comprising a step consisting of an annealing treatment of the assembled martensitic stainless steel component.

14. Thermomechanically resistant bimetal part comprising a component made of martensitic stainless steel assembled by diffusion welding without an intermediate element with a component of copper or copper alloy obtainable using a process according to any of claims 1 to 13.

15. Bimetal part according to claim 14, wherein the assembled components have a thickness greater than or equal to approximately 1 mm on their assembled surfaces.

16. Glassware mould comprising a thermomechanically resistant bimetal part according to claim 14 or 15.
